(19) Europäisches Patentamt
European Patent Office
Office européen des brevets

(11) EP 2 013 307 B1

(12) **EUROPÄISCHE PATENTSCHRIFT**

(45) Veröffentlichungstag und Bekanntmachung des Hinweises auf die Patenterteilung:
**01.12.2010 Patentblatt 2010/48**

(21) Anmeldenummer: **07724568.6**

(22) Anmeldetag: **25.04.2007**

(51) Int Cl.:
***C09K 3/14*** *(2006.01)*

(86) Internationale Anmeldenummer:
**PCT/EP2007/003638**

(87) Internationale Veröffentlichungsnummer:
**WO 2007/124905 (08.11.2007 Gazette 2007/45)**

(54) **SCHLEIFKORN AUF BASIS VON GESCHMOLZENEM KUGELKORUND**

ABRASIVE GRAIN BASED ON MELTED SPHERICAL CORUNDUM

GRAIN ABRASIF À BASE DE CORINDON SPHÉRIQUE FONDU

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.04.2006 DE 102006020362**

(43) Veröffentlichungstag der Anmeldung:
**14.01.2009 Patentblatt 2009/03**

(73) Patentinhaber: **Center for Abrasives and Refractories Research & Development C.A.R.R.D. GmbH**
**9524 Villach (AT)**

(72) Erfinder: **SACHSE, Sebastian**
**A-9500 Villach (AT)**

(74) Vertreter: **Patentanwälte Westphal, Mussgnug & Partner**
**Am Riettor 5**
**78048 Villingen-Schwenningen (DE)**

(56) Entgegenhaltungen:
**WO-A-2004/053013**
**DD-A1- 134 638**
**DE-C1- 3 147 597**
**US-A- 1 871 793**
**US-A- 2 527 044**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 013 307 B1

## Beschreibung

Die vorliegende Erfindung betrifft ein Schleifkorn auf Basis von geschmolzenem Kugelkorund, wobei das Schleifkorn aus einem Kugelkorundkern besteht, der mit einer einen Binder und feinkörnige, abrasive Feststoffpartikel umfassenden Schicht ummantelt ist.

Kugelkorund ist schon seit etwa 75 Jahren bekannt und wird großtechnisch seit etwa 30 Jahren hergestellt. So beschreiben die US-Patente 1,871,792 und 1,871,793 das Verblasen eines Gießstrahls von flüssigem Korund mittels Pressluft oder Dampf, wobei Korundhohlkugeln mit einem Durchmesser von etwa 0 - 5 mm entstehen. In den oben genannten US-Schriften werden bereits alle wesentlichen Schritte des noch heute angewendeten Herstellungsverfahrens beschrieben. Zahlreiche weitere Patentschriften beschreiben die Verwendung der so erhaltenen Hohlkugeln. So beschreibt die DE 628 936 das Vermahlen und Glasieren der Hohlkugeln zu Schleifmittelkörnungen, aus denen dann Schleifkörper hergestellt werden. Aufgrund der hohen Porosität des Materials und der geringen Festigkeit der Hohlkugeln entstehen bei der Aufbereitung zu Schleifmittelkörnungen relativ feine Körnungen, die nur für bestimmte Spezialanwendungen eingesetzt werden können. Da entsprechende Feinkörnungen zwangsweise bei der konventionellen Aufbereitung von Schmelzkorund anfallen, ist die Herstellung von Schleifmittelkörnungen aus Hohlkugelkorund jedoch wirtschaftlich wenig sinnvoll.

Bei der Herstellung von konventionellen Korundschleifkörnern wird zunächst Tonerde oder Bauxit als Rohstoff im elektrischen Lichtbogenofen geschmolzen. Der geschmolzene Korund wird anschließend abgekühlt und fällt dabei in Form von Blöcken von 10 - 15 to an. Diese Korundblöcke werden nach dem vollständigen Abkühlen, was 2 bis 5 Tage dauert, anschließend mit Brechern und Walzen zerkleinert und das dabei anfallende Material wird zu den entsprechenden Schleifkörnungen ausgesiebt. Ein nicht unwesentlicher Anteil Kosten bei der Herstellung von Korund beruht somit auf Zerkleinerungsarbeit und Verschleiß bei der Zerkleinerung der Korundblöcke mit einem Durchmesser bis zu mehreren Metern bis hin zu den Schleifkörnungen, die im Bereich von wenigen Mikrometern bis wenigen Millimetern liegen. So hat man in der Vergangenheit immer wieder versucht, die aufwändige Zerkleinerungsarbeit dadurch zu umgehen, dass man die flüssige Korundschmelze noch vor dem Erstarren dispergiert hat.

Wie bereits eingangs erwähnt, gelingt es durch Verblasen eines Gießstrahls aus flüssigem Korund, porösen Hohlkugelkorund herzustellen, der als Schleifkorn jedoch wenig geeignet ist.

So findet der Kugelkorund heute aufgrund seiner geringen Wärmeleitfähigkeit, seiner chemischen Inertheit und seiner Porosität überwiegend Verwendung als feuerfester Stoff. Der Einsatz von Kugelkorund in Feuerfestindustrie wird erstmals in der US 2,261,639 beschrieben.

In der Schleifmittelindustrie dagegen wird Kugelkorund überwiegend nicht als Schleifkorn, sondern als Porenbildner bei der Herstellung von Schleifscheiben eingesetzt. Derartige Schleifkörper werden beispielsweise in der US 2,986,455 oder der DE 1 281 306 beschrieben.

Dennoch hat man das Verblasen von Korund immer wieder aufgegriffen, um auf diese Weise Schleifkorn herzustellen. So wird in dem US-Patent 2,261,639 eine Schmelze aus Aluminiumoxid mit einem Zusatz von 1 - 10% Natriumoxid beschrieben, die mit Luft verblasen wird, wobei kompakte kristalline Kugeln erhalten werden, die nach dem Zerkleinern auch als Schleifmittel eingesetzt werden können. Hohe Anteile an Natriumoxid jedoch führen zur Ausbildung von Natriumaluminaten, wodurch die Leistungsfähigkeit eines Schleifkorns stark herabgesetzt wird.

Die US 2,340,194 beschreibt den Zusatz von 1 - 1,5% Titanoxid in der Schmelze, der zu druckfesten Hohlkugeln mit relativ dicken Wänden führen soll. Die DD 134 638 beschreibt ein Verfahren zur Herstellung von Korundhohlkugeln, wobei die Eigenschaft der Korundhohlkugeln durch den Zusatz von nitritgebundenem Stickstoff in Form von Aluminiumnitrid oder Aluminiumoxynitrid beeinflusst werden.

In der GB 284 131 wird ein Verfahren beschrieben, bei dem der flüssige Korund zunächst mittels eines Luftstroms in eine Kühlkammer geblasen wird, wo die einzelnen Teilchen dann mit einem Kühlwasserstrom weiter abgekühlt werden. Dabei entstehen Teilchen von ca. 3 mm Durchmesser. Die EP 1 157 077 beschreibt die Herstellung von polykristallinen Schleifkörnern, wobei der flüssige Korund abgegossen und seine Abkühlung durch Dispersion des geschmolzenen Aluminiumoxids in feine Tröpfchen unter Verwendung von Ultraschall unterstützt wird. Dabei werden dichte Teilchen mit einem mittleren Durchmesser von weniger als 1 mm erhalten. Die Kristallitgröße dieser Teilchen liegt unter 30 $\mu$m.

DE 31 47597 beschreibt Korund-Schleifkörner mit keramischer Ummantelung und eine Methode zur Herstellung solcher Schleifkörner.

Die genannten Verfahren nach dem Stand der Technik haben den Nachteil, dass man entweder versucht, die physikalischen Eigenschaften wie Porosität und Dichte des gewünschten Produktes über die chemische Zusammensetzung zu beeinflussen, was konsequenterweise auch zu einer Änderung der chemischen Zusammensetzung des Produktes führt, wodurch dann häufig die Leistungsfähigkeit des Produktes als Schleifkorn herabgesetzt wird, oder man versucht, über verfahrenstechnische Variationen die physikalischen Produkteigenschaften zu beeinflussen, was in der Regel mit einem hohen technischen Aufwand verbunden ist und zu entsprechenden Kosten bei der Herstellung führt, sodass sich bis heute keines der oben genannten Verfahren zur direkten Herstellung von Schleifkorn durchsetzen konnte.

Es besteht somit weiterhin Bedarf an einem Verfahren, Schleifkorn direkt aus der Schmelze ohne aufwändige Zerkleinerungsarbeit herzustellen.

Die Aufgabe der vorliegenden Erfindung besteht somit darin, ein Verfahren zur Verfügung zu stellen; das die Nachteile des Standes der Technik nicht aufweist und mit dem auf einfache Weise ein leistungsfähiges Schleifkorn hergestellt werden kann, ohne dabei die sonst übliche aufwändige Zerkleinerungsarbeit durchführen zu müssen.

Gelöst wird diese Aufgabe durch ein Verfahren mit den Merkmalen nach Anspruch 13 sowie ein Schleifkorn mit den Merkmalen nach Anspruch 1.

Weiterbildungen und Ausgestaltungen des Erfindungsgedankens sind Gegenstand der Unteransprüche.

Überraschenderweise wurde gefunden, dass durch Ummanteln von konventionellem, porösem Kugelkorund mit einer Schicht aus feinkörnigen, abrasiven Feststoffpartikeln zusammen mit einem Binder und anschließendes Tempern des so ummantelten Kugelkorundes ein poröser, im Wesentlichen sphärischer Festkörper erhalten wird, der hervorragende Eigenschaften als Schleifkorn besitzt.

So erhält der Kugelkorund durch die zusätzliche Ummantelung Eigenschaften, die ihn für den Einsatz als Schleifkorn qualifizieren.

Zunächst wird durch den Einsatz der feinkörnigen Feststoffpartikel die spezifische Oberfläche erhöht, wodurch eine Einbindung des Kugelkorundes im Schleifmittel, wie zum Beispiel in einer Schleifscheibe oder Schleifmitteln auf Unterlage, verbessert wird. So erhält man mit der Ummantelung spezifische Oberflächen von 0,1 bis 0,3 $m^2/g$. Damit ist die Oberfläche des ummantelten Korundes etwa zwanzig Mal höher als die des nicht ummantelten Korundes.

Durch die zusätzliche mikroporöse Ummantelung weist das erfindungsgemäße Schleifkorn eine außerordentlich hohe Gesamtporosität auf, wobei die offene Porosität zwischen 10 und 30% und die geschlossene Porosität zwischen 60 und 90% liegt und sich die Gesamtporosität R aus der Summe der offenen Porosität und der geschlossenen Porosität zur geschlossenen Porosität ergibt und sich nach der Formel

$$R = \frac{(\text{Porosität offen} + \text{Porosität geschlossen})}{\text{Porosität offen}}$$

Berechnet. R weist Werte zwischen 3 und 10 auf.

Aufgrund der hohen Porosität besitzt das erfindungsgemäße Schleifkorn eine relativ niedrige Schüttdichte, die mit 0,5 - 1 kg/l deutlich unter den sonst üblichen Werten für Schleifkörnungen liegt.

Die Porositätswerte wurden über Quecksilberporosimetrie und digitale Bildanalyse gemessen, während die Schüttdichten auf die übliche Weise durch Auslitern und Auswiegen von Schleifkörnern gemessen wurde.

Als Binder kommen sowohl organische als auch anorganische Binder in Frage. Bei einer bevorzugten Ausführungsform der vorliegenden Erfindung werden anorganische Binder eingesetzt, insbesondere silikatische Binder und/ oder phosphatische Binder.

Je nach Einsatzzweck des Schleifkorns können auch organische Binder eingesetzt werden, wobei ein bevorzugter Binder Kunstharz ist. Der Anteil des Binders, bezogen auf den Gesamtfeststoffanteil des Schleifkorns, beträgt 0,05 - 10 Gew.-%. Häufig werden relativ hohe Binderanteile eingesetzt, da die Ummantelungsschicht verhältnismäßig dick ist und entsprechende Binderanteile eingesetzt werden müssen, um die für ein Schleifkorn erforderliche Festigkeit zu erzielen.

Die Ummantelung selber besteht im Wesentlichen aus feinkörnigen abrasiven Feststoffpartikeln. Eingesetzt werden bevorzugt Edelkorund, Normalkorund, Halbedelkorund oder Zirkonkorund. Bevorzugte Ausführungsformen können jedoch auch Zirkonmullit, Siliciumcarbid, Diamant und/oder kubisches Bornitrid enthalten. Die Partikelgrößen der Feststoffpartikel liegen zwischen 0,1 - 100 μm. Bei bevorzugten Ausführungsformen liegt die mittlere Partikelgröße der Feststoffpartikel zwischen 3 und 25 μm.

Wie bereits oben erwähnt, ist das erfindungsgemäße Schleifkorn mit einer relativ dicken Schicht ummantelt und der Anteil an abrasiven Feststoffpartikeln beträgt zwischen 20 und 40 Gew.-%, bezogen auf den Gesamtfeststoffanteil des Schleifkorns. Die Schichtdicke selber liegt zwischen 50 und 500 μm, bevorzugt zwischen 150 μm und 300 μm, und beträgt erfindungsgemäß ein Vielfaches der jeweiligen mittleren Korngröße der Feststoffpartikel. Erfindungswesentlich ist somit, dass die Ummantelung mehrere Lagen an Feststoffpartikel aufweist. Es wurde gefunden, dass nur dann der ummantelte Kugelkorund die notwendige Festigkeit erreicht, um wirkungsvoll als Schleifkorn eingesetzt zu werden.

Je nach Anwendungsfall kann es vorteilhaft sein, in die ummantelnde Schicht neben dem Binder und dem feinkörnigen abrasiven Feststoff zusätzliche Additive einzubauen. Als Additive kommen Sinteradditive, Zementbildner und/oder schleifaktive Stoffe in Frage. Die zusätzlichen Additive werden bevorzugt mit dem feinkörnigen abrasiven Feststoff vermischt, bevor dieser als Schicht auf den Kugelkorund aufgetragen wird.

Das Verfahren zur Herstellung der erfindungsgemäßen Schleifkörner ist relativ einfach und wenig aufwändig. Der Kugelkorund selber wird auf konventionelle Weise durch Verblasen der flüssigen Schmelze mit einem Luft-Wasser-Gemisch hergestellt. Die dabei anfallenden porösen kugelförmigen $Al_2O_3$-Körper werden in einem Zwangsmischer mit einem Binder vermischt. Anschließend werden zu dem mit dem Binder benetzten Kugelkorund die feinkörnigen abrasiven Feststoffpartikel gegeben, die dann an der Oberfläche des Kugelkorunds anhaften. Sobald die Ummantelungsschicht die gewünschte Dicke erreicht hat, werden die beschichteten porösen kugelförmigen $Al_2O_3$-Körper einer thermischen Behandlung unterzogen, um auf diese Weise die Ummantelung zu verfestigen.

Welche Art von Binder verwendet wird, hängt vom späteren Einsatzzweck des Schleifkorns ab. Ist an einen Einsatz in keramisch gebundenen Schleifscheiben gedacht, wo werden bevorzugt anorganische Binder eingesetzt, wobei bei einer besonders günstigen Variante Wasserglas eingesetzt wird, das preiswert in großen Mengen erhältlich ist. Beim Einsatz von anorganischen Bindern wird die anschließende thermische Behandlung in einem Temperaturbereich zwischen 400 - 1400°C durchgeführt, wobei der Binder zusammen mit dem feinkörnigen abrasiven Feststoff zu einer festen Schicht zusammengesintert wird.

Soll der ummantelte Hohlkugelkorund in Kunstharz gebundenen Schleifscheiben eingesetzt werden, ist es auch möglich, organische Binder einzusetzen, wobei bevorzugt der Bindertyp eingesetzt wird, der auch als Binder in der Schleifscheibe selber Verwendung findet. Derartige organische Bindungssysteme werden zwischen 200 - 500°C ausgehärtet. Organische Binder eignen sich ebenfalls zur Beschichtung von Kugelkorund für den Einsatz in Schleifmitteln auf Unterlage.

Durch den Einsatz zusätzlicher Additive kann die Schleifwirkung, das Sinterverhalten oder aber die Bindungsbildung bei einem erfindungsgemäßen Schleifkorn verbessert werden. So können vorteilhafterweise bei der Verwendung von Kunstharz als Binder zusätzlich schleifaktive Stoffe eingesetzt werden, wie z. B. Sulfide, Carbonate, Halogenide oder andere Stoffe, die den Schleifprozess fördern. Bei der Verwendung von anorganischen Bindern können zusätzlich Sinteradditive zugesetzt werden oder Zementbildner, die die Festigkeit der Ummantelung selber begünstigen.

Die Festigkeit des ummantelten Kugelkorundes kann im sogenannten CFF-Test (Compressive Fracture Force Test) bestimmt werden. Bei diesem Test wird ein einzelnes grobes Schleifkorn mit einem hydraulischen Stempel zerdrückt und es wird die Kraft gemessen, die erforderlich ist, um das Schleifkorn zu zerstören. Mit diesem Verfahren konnte festgestellt werden, dass der erfindungsgemäße ummantelte Kugelkorund etwa die 3- bis 5-fache Festigkeit im Vergleich zum nicht ummantelten Kugelkorund besitzt und damit in Festigkeitsbereichen liegt, die dem konventionellen Schmelzkorund entsprechen.

Mit dem oben beschriebenen Verfahren gelingt es somit, durch Ummanteln von Kugelkorund Schleifkörner herzustellen, die aufgrund der zahlreichen Variationsmöglichkeiten bei der Ummantelung ihrem jeweiligen Einsatzzweck hervorragend angepasst werden können.

Im Folgenden wird die vorliegende Erfindung anhand einiger ausgewählter Beispiele ausführlich erläutert.

<u>Beispiel 1</u>

**Herstellung des ummantelten Kugelkorundes**

63 kg Kugelkorund (ALODUR KKW, Treibacher Schleifmittel AG) mit einer mittleren Partikelgröße von 2 - 3 mm wurden in einen Zwangsmischer gegeben und mit 6 kg einer Mischung aus Wasserglas und Wasser im Verhältnis 1:1 vermischt, bis die Oberfläche des Kugelkorundes gleichmäßig benetzt war. Zu dieser Mischung wurden 27 kg Normalkorund (ESK P1400, Treibacher Schleifmittel AG) mit einer maximalen Teilchengröße von 20 $\mu$m gegeben. Die Mischung wurde ca. 2 - 3 Minuten homogenisiert. Die so erhaltenen homogen ummantelten Korundkugeln wurden bei 50 °C getrocknet und anschließend in einem Drehrohrofen bei 1300 °C gesintert. Die Aufenthaltszeit im Sinterofen betrug ca. 20 Minuten. Die mittlere Schichtdicke der Ummantelung wurde im Elektronenmikroskop mit ca. 250 $\mu$m bestimmt.

<u>Beispiel 2</u>

**Schleiftest (Planschleifen)**

Die nach Beispiel 1 erhaltenen Schleifkörner wurden zusammen mit Normalkorundschleifkörnern der Korngröße F46 zu einem harzgebundenen Schleifsegment verarbeitet, wobei das Verhältnis Normalkorund : Schleifkorn(Beispiel 1) 3 : 1 betrug. Die Abmessungen des Schleifsegmentes betrugen 280 x 55 mm bei einer Schleifkörperfläche von 0.059 $m^2$. Es wurden Schleifsegmente mit unterschiedlichen Härtegraden hergestellt (G bzw. H).

Die so erhaltenen Schleifsegmente wurden gegen ein Werkstück aus unlegiertem Hartstahl (1018) mit einer Werkstückoberfläche von 0.206 $m^2$ getestet. Zum Vergleich wurden analoge Segmente eingesetzt, bei denen statt des ummantelten Kugelkorundes ein konventioneller Kugelkorund eingesetzt wurde.

Die Segmente wurden bei einer Maschinenleistung von 18,4 kW bzw. 36,8 kW, einer Schnittgeschwindigkeit von 18 U/min, einer Zustellgeschwindigkeit von 0.5 mm/min und einer Gesamtzustellung von 10.2 mm zum Planschleifen eingesetzt. Die erhaltenen Schleifergebnisse sind in der folgenden Tabelle 1 zusammengefasst:

Tabelle 1

| Leistung | 18,4 kW | | | | 36,8 kW | | | |
|---|---|---|---|---|---|---|---|---|
| Härte | G | | H | | G | | H | |
| Muster | B1* | V1* | B1 | V1 | B1 | V1 | B1 | V1 |
| Abtrag | 3.8 | 3.2 | 4.2 | 3.2 | 6.7 | 5.4 | 7.6 | 5.6 |
| Verschleiß | 7.3 | 6.9 | 7.1 | 6.6 | 7.6 | 7.3 | 7.6 | 7.1 |
| G-Faktor** | 1.8 | 1.6 | 2.1 | 1.7 | 3.1 | 2.6 | 3.5 | 2.8 |
| * B1 = Muster mit ummanteltem Kugelkorund nach Beispiel 1, V1 = Vergleichsbeispiel mit konv. Kugelkorund<br>** Der G-Faktor berechnet sich aus Abtrag x Werkstückfläche / Verschleiß x Schleifkörperfläche | | | | | | | | |

Wie aus den Ergebnisse in Tabelle 1 zu erkennen ist, können durch die Verwendung des erfindungsgemäßen ummantelten Kugelkorundes Steigerungen des G-Faktors bis zu 25 % erreicht werden.

Beispiel 3

**Schleiftests (Tiefschleifen)**

In Analogie zu dem Beispiel 1 beschriebenen Verfahren wurde ein ummantelter Kugelkorund mit einer mittleren Korngröße von 260 $\mu$m (Korn F60) hergestellt und zu einer keramisch gebundenen Schleifscheibe mit den Abmessungen 500 x 65 x 203,2 mm verarbeitet. Zum Vergleich wurde unter den gleichen Bedingungen eine keramisch gebundene Scheibe mit Edelkorund Weiß (F60) gefertigt.

Bearbeitet wurde mit den oben genannten Schleifscheiben ein Werkzeugstahl DIN 1.2242 im Tiefschleifen.

Beim Einsatz des erfindungsgemäßen Kugelkorundes konnte im Vergleich zu der Scheibe mit Edelkorund Weiß eine Steigerung der Werkzeuggeschwindigkeit um ca. 17 % erreicht werden, ohne dass es dabei zu einem Anlaufen des Werkstückes oder einem Profilverlust gekommen wäre. Somit ergeben sich als Vorteile Zeitersparnis und eine höhere Maschinenbelegung.

**Patentansprüche**

**1.** Schleifkorn mit einem Kern aus geschmolzenem Kugelkorund, wobei der geschmolzene Kugelkorund ein durch Verblasen einer flüssigen Schmelze mit einem Luft-Wasser-Gemisch hergestellter poröser kugelförmiger $Al_2O_3$-Körper ist,
**dadurch gekennzeichnet, dass** der Kugelkorund mit einer Schicht aus mindestens einem Binder und feinkörnigen, abrasiven Feststoffpartikeln ummantelt ist.

**2.** Schleifkorn nach Anspruch 1,
**dadurch gekennzeichnet, dass** der Kugelkorund einen mittleren Durchmesser von 0.05 bis 5 mm aufweist.

**3.** Schleifkorn nach Anspruch 1 oder 2,
**dadurch gekennzeichnet, dass** die Dicke der Schicht zwischen 50 und 500 $\mu$m, vorzugsweise zwischen 150 und 300 $\mu$m beträgt.

**4.** Schleifkorn nach einem der Ansprüche 1 bis 3,
**dadurch gekennzeichnet, dass** die feinkörnigen, abrasiven Feststoffpartikel einen mittleren Partikeldurchmesser zwischen 0.1 und 100 $\mu$m, vorzugsweise zwischen 3 und 25 $\mu$m, aufweisen.

**5.** Schleifkorn nach einem der Ansprüche 1 bis 4,

**dadurch gekennzeichnet, dass** der Anteil an feinkörnigen, abrasiven Feststoffpartikel 20 bis 40 Gew.-%, bezogen auf den Gesamtfeststoffanteil des Schleifkorns, beträgt.

6. Schleifkorn nach einem der Ansprüche 1 bis 5,
**dadurch gekennzeichnet, dass** die Dicke der Schicht 1/20 bis 1/5 des Kugeldurchmessers beträgt.

7. Schleifkorn nach einem der Ansprüche 1 bis 6,
**dadurch gekennzeichnet, dass** die Schicht das 5-fache bis 100-fache, vorzugsweise das 20-fache bis 50-fache, der mittleren Partikelgröße der Feststoffpartikel beträgt.

8. Schleifkorn nach Anspruch 1 oder 7,
**dadurch gekennzeichnet, dass** das Schleifkorn eine offene Porosität von 10 bis 30 % sowie eine geschlossene Porosität von 60 bis 90 % und ein Verhältnis R der Gesamtporosität (offene Porosität + geschlossene Porosität) zur offenen Porosität nach der Formel

$$R = \frac{\text{Porosität}_{\text{offen}} + \text{Porosität}_{\text{geschlossen}}}{\text{Porosität}_{\text{offen}}}$$

von 3 bis 10 aufweist.

9. Schleifkorn nach einem der Ansprüche 1 bis 8,
**dadurch gekennzeichnet, dass** das Schleifkorn eine spezifische Oberfläche BET von 0.1 bis 0.3 $m^2/g$ aufweist.

10. Schleifkorn nach einem der Ansprüche 1 bis 9,
**dadurch gekennzeichnet, dass** das Schleifkorn eine Schüttdichte von 0.5 bis 1.0 kg/l aufweist.

11. Schleifkorn nach einem der Ansprüche 1 bis 10,
**dadurch gekennzeichnet, dass** der Binder ein anorganischer, insbesondere ein silikatischer oder phosphatischer Binder, ist.

12. Schleifkorn nach einem der Ansprüche 1 bis 10,
**dadurch gekennzeichnet, dass** der Binder ein organischer Binder, insbesondere ein Kunstharz, ist.

13. Schleifkorn nach einem der Ansprüche 1 bis 12,
**dadurch gekennzeichnet, dass** die Menge an Binder 0.05 bis 5 Gew.-%, bezogen auf den Gesamtfeststoffanteil des Schleifkorns beträgt.

14. Schleifkorn nach einem der Ansprüche 1 bis 13,
**dadurch gekennzeichnet, dass** die feinkörnigen, abrasiven Feststoffpartikel ausgewählt sind aus der Gruppe, umfassend Edelkorund, Normalkorund, Halbedelkorund, Zirkonkorund, Zirkonmullit, Siliziumkarbid, Diamant und kubisches Bornitrid.

15. Schleifkorn nach einem der Ansprüche 1 bis 14,
**dadurch gekennzeichnet, dass** in der ummantelnden Schicht neben dem Binder und dem feinkörnigen, abrasiven Feststoff zusätzliche Additive aus der Gruppe, umfassend Sinteradditive, Zementbildner und schleifaktive Stoffe, wie z.B. Sulfide, Carbonate, Halogenide und Phosphate aus der Gruppe der Elemente, umfasend Na, K, Li, Mg, Ca, Al, Mn, Cu, Sn, Fe, Ti, Sb und Zn, enthalten sind.

16. Verfahren zur Herstellung von Schleifkörnern auf Basis von geschmolzenem Kugelkorund, umfassend die Schritte:

- Schmelzen von Aluminiumoxid im elektrischen Lichtbogenofen,
- Verblasen der flüssigen Schmelze mit einem Luft/Wassergemisch zu porösen, kugelförmigen $Al_2O_3$-Körpern,

**dadurch gekennzeichnet, dass**

- die erhaltenen porösen, kugelförmigen $Al_2O_3$-Körper in einem Mischer mit mindestens einem Binder vermischt werden,
- die mit dem mindestens einen Binder benetzten porösen, kugelförmigen $Al_2O_3$-Körper durch Zumischen von feinkörnigen, abrasiven Feststoffpartikeln mit einer Schicht von feinkörnigen, abrasiven Feststoffpartikeln versehen werden, und
- die mit feinkörnigen, abrasiven Feststoffpartikeln beschichteten porösen, kugelförmigen $Al_2O_3$-Körper anschließend einer thermischen Behandlung unterzogen werden, um die Ummantelung zu verfestigen.

**17.** Verfahren nach Anspruch 16,
**dadurch gekennzeichnet, dass** ein mit Wasser verdünnter anorganischer Binder eingesetzt wird.

**18.** Verfahren nach einem der Ansprüche 16 der 17,
**dadurch gekennzeichnet, dass** die thermische Behandlung in einem Temperaturbereich zwischen 400 und 1400 °C durchgeführt wird.

**19.** Verfahren nach Anspruch 16,
**dadurch gekennzeichnet, dass** ein organischer Binder eingesetzt wird.

**20.** Verfahren nach Anspruch 16 oder 19,
**dadurch gekennzeichnet, dass** die thermische Behandlung in einem Temperaturbereich zwischen 200 und 500 °C durchgeführt wird.

**21.** Verfahren nach einem der Ansprüche 16 bis 20,
**dadurch gekennzeichnet, dass** zusammen mit den feinkörnigen, abrasiven Feststoffen zusätzliche Additive aus der Gruppe, umfassend Sinteradditive, Zementbildner und schleifaktive Stoffe, wie z.B. Sulfide, Carbonate, Halogenide und Phosphate aus der Gruppe der Elemente, umfassend Na, K, Li, Mg, Ca, Al, Mn, Cu, Sn, Fe, Ti, Sb und Zn, zugegeben werden.

**22.** Verwendung des Schleifkorns nach einem der Ansprüche 1 bis 15 zur Herstellung von Schleifscheiben.

**23.** Verwendung des Schleifkorns nach einem der Ansprüche 1 bis 15 zur Herstellung von Schleifmitteln auf Unterlage.

## Claims

**1.** An abrasive grain with a core of fused spherical corundum, wherein the fused spherical corundum is a porous spherical $Al_2O_3$ body produced by blasting a liquid melt with an air / water mixture, **characterized in that** the spherical corundum is clad with a layer of at least one binder and fine-grained, abrasive solid particles.

**2.** An abrasive grain according to claim 1, **characterized in that** the spherical corundum has an average diameter of from 0.05 to 5 mm.

**3.** An abrasive grain according to claim 1 or 2, **characterized in that** the thickness of the layer amounts to between 50 and 500 μm, preferably between 150 and 300 μm.

**4.** An abrasive grain according to any one of claims 1 to 3, **characterized in that** the fine-grained, abrasive solid particles have an average particle diameter of between 0.1 and 100 μm, preferably between 3 and 25 μm.

**5.** An abrasive grain according to any one of claims 1 to 4, **characterized in that** the proportion of fine-grained, abrasive solid particles amounts to from 20 to 40 % by weight relative to the total solid proportion of the abrasive grain.

**6.** An abrasive grain according to any one of claims 1 to 5, **characterized in that** the thickness of the layer amounts to from 1/20 to 1/5 of the sphere diameter.

**7.** An abrasive grain according to any one of claims 1 to 6, **characterized in that** the layer amounts to from 5 times to 100 times, preferably from 20 times to 50 times, the average particle size of the solid particles.

**8.** An abrasive grain according to claim 1 or 7, **characterized in that** the abrasive grain has an open porosity of from 10 to 30 % and a closed porosity of from 60 to 90 % and a ratio R of the total porosity (open porosity + closed porosity) to the open porosity according to the formula

$$R = \frac{porosity_{open} + porosity_{closed}}{porosity_{open}}$$

of from 3 to 10.

**9.** An abrasive grain according to any one of claims 1 to 8, **characterized in that** the abrasive grain has a BET specific surface of from 0.1 to 0.3 $m^2/g$.

**10.** An abrasive grain according to any one of claims 1 to 9, **characterized in that** the abrasive grain has a bulk density of from 0.5 to 1.0 kg/l.

**11.** An abrasive grain according to any one of claims 1 to 10, **characterized in that** the binder is an inorganic binder, in particular a silicate or phosphate binder.

**12.** An abrasive grain according to any one of claims 1 to 10, **characterized in that** the binder is an inorganic binder, in particular a synthetic resin.

**13.** An abrasive grain according to any one of claims 1 to 12, **characterized in that** the quantity of binder amounts to from 0.05 to 5 % by weight relative to the total solid proportion of the abrasive grain.

**14.** An abrasive grain according to any one of claims 1 to 13, **characterized in that** the fine-grained, abrasive solid particles are selected from the group comprising high-grade corundum, regular corundum, semi-pure corundum, zirconium corundum, zirconium mullite, silicon carbide, diamond and cubic boron nitride.

**15.** An abrasive grain according to any one of claims 1 to 14, **characterized in that** additional additives from the group comprising sintered additives, cement formers and grinding-active substances, such as for example sulphides, carbonates, halides and phosphates from the group of elements, comprising Na, K, Li, Mg, Ca, Al, Mn, Cu, Sn, Fe, Ti, Sb and Zn, are contained in addition to the binder and the fine-grained, abrasive solid in the cladding layer.

**16.** A method of producing abrasive grains on the basis of fused spherical corundum, comprising the steps:

- melting aluminium oxide in an electric arc furnace,
- blasting the liquid melt with an air / water mixture to form porous, spherical $Al_2O_3$ bodies,

**characterized in that**

- the porous, spherical $Al_2O_3$ bodies obtained are mixed with at least one binder in a mixer,
- the porous, spherical $Al_2O_3$ bodies wetted with the at least one binder are provided with a layer of fine-grained, abrasive solid particles by the admixture of fine-grained abrasive solid particles, and
- the porous, spherical $Al_2O_3$ bodies coated with fine-grained, abrasive solid particles are then subjected to a thermal treatment in order to solidify the cladding.

**17.** A method according to claim 16, **characterized in that** an inorganic binder diluted with water is used.

**18.** A method according to one of claims 16 of 17, **characterized in that** the thermal treatment is carried out in a temperature range of between 400 and 1400°C.

**19.** A method according to claim 16, **characterized in that** an organic binder is used.

**20.** A method according to claim 16 or 19, **characterized in that** the thermal treatment is carried out in a temperature range of between 200 and 500°C.

**21.** A method according to any one of claims 16 to 20, **characterized in that** additional additives from the group

comprising sintered additives, cement formers and grinding-active substances, such as for example sulphides, carbonates, halides and phosphates from the group of elements, comprising Na, K, Li, Mg, Ca, Al, Mn, Cu, Sn, Fe, Ti, Sb and Zn, are added together with the fine-grained abrasive, solid particles.

**22.** Use of the abrasive grain according to any one of claims 1 to 15 in order to produce grinding wheels.

**23.** Use of the abrasive grain according to any one of claims 1 to 15 in order to produce grinding materials on a support.

## Revendications

**1.** Grain abrasif comportant un noyau formé d'une bille sphérique de corindon fondu,
cette bille sphérique de corindon fondu étant une pièce en $Al_2O_3$, de forme sphérique poreuse fabriquée par soufflage d'un bain liquide avec un mélange air-eau,
**caractérisé en ce que**
la bille sphérique de corindon est entourée d'une couche formée d'au moins un liant et de particules de granulométrie fine, abrasives de matières solides.

**2.** Grain abrasif selon la revendication 1,
**caractérisé en ce que**
la bille sphérique de corindon a un diamètre moyen compris entre 0,05-5 mm.

**3.** Grain abrasif selon la revendication 1 ou 2,
**caractérisé en ce que**
l'épaisseur de la couche est comprise entre 50 et 500 $\mu$m et de préférence entre 150 et 300 $\mu$m.

**4.** Grain abrasif selon l'une des revendications 1 à 3,
**caractérisé en ce que**
les particules de matières solides, abrasives, à granulométrie fine, ont un diamètre moyen de particules compris entre 0,1 et 100 $\mu$m et de préférence entre 3 et 25 $\mu$m.

**5.** Grain abrasif selon l'une des revendications 1 à 4,
**caractérisé en ce que**
la teneur en particules en matières solides abrasives à granulométrie fine, représente de 20 à 40 % en poids de la teneur totale en matières solides du grain abrasif.

**6.** Grain abrasif selon l'une des revendications 1 à 5,
**caractérisé en ce que**
l'épaisseur de la couche correspond à 1 / 20 jusqu'à 1/5 du diamètre de la bille sphérique.

**7.** Grain abrasif selon l'une des revendications 1 à 6,
**caractérisé en ce que**
la couche correspond de 5 fois jusqu'à 100 fois et de préférence de 20 fois jusqu'à 50 fois, à la taille moyenne des particules de matières solides.

**8.** Grain abrasif selon l'une des revendications 1 ou 7,
**caractérisé en ce que**
le gain abrasif a une porosité ouverte comprise entre 10 et 30 % et une porosité fermée comprise entre 60 et 90 % ainsi qu'un rapport R entre la porosité totale (porosité ouverte + porosité fermée) à la porosité ouverte selon la formule suivante :

$$R = \frac{\text{Porosité}_{\text{ouverte}} + \text{Porosité}_{\text{fermée}}}{\text{Porosité}_{\text{ouverte}}}$$

ce rapport étant compris entre 3 et 10.

**9.** Grain abrasif selon l'une des revendications 1 à 8,
**caractérisé en ce que**
le grain abrasif a une surface spécifique BET comprise entre 0,1 et 0,3 $m^2$/g.

**10.** Grain abrasif selon l'une des revendications 1 à 9,
**caractérisé en ce que**
le grain abrasif a une densité en vrac comprise entre 0,5 et 1,0 kg/l.

**11.** Grain abrasif selon l'une des revendications 1 à 10,
**caractérisé en ce que**
le liant est un liant anorganique, notamment un liant de silicate ou de phosphate.

**12.** Grain abrasif selon l'une des revendications 1 à 10,
**caractérisé en ce que**
le liant est un liant organique, notamment une résine synthétique.

**13.** Grain abrasif selon l'une des revendications 1 à 12,
**caractérisé en ce que**
la quantité de liant est comprise entre 0,05 et 5 % en poids de la teneur totale en matières solides du grain abrasif.

**14.** Grain abrasif selon l'une des revendications 1 à 13,
**caractérisé en ce que**
les particules de matières solides abrasives à granulométrie fine, sont choisies dans le groupe comprenant le corindon noble, le corindon normal, le semi-corindon, le corindon de zirconium, la mullite de zirconium, le carbure de silicium, le diamant et le nitrure cubique de bore.

**15.** Grain abrasif selon l'une des revendications 1 à 14,
**caractérisé en ce que**
la couche enveloppe contient en plus du liant et de la matières solide abrasive à granulométrie fine, des additifs supplémentaires dans le groupe comprenant des additifs de frittage, des agents formant un ciment et des matières abrasives actives telles que par exemple des sulfures, des carbonates, des halogénures, des phosphates du groupe des éléments comprenant Na, K, Li, Mg, Ca, Al, Mn, Cu, Sn, Fe, Ti, Sb, Zn.

**16.** Procédé de fabrication de grains abrasifs à base de corindon sphérique fondu comprenant les étapes suivantes :

- fusion d'oxyde d'aluminium dans un four à arc électrique,
- soufflage du bain fondu avec un mélange air-eau pour former des corps de $Al_2O_3$ de forme sphérique, poreux,

**caractérisé en ce qu'**

- on mélange les corps de $Al_2O_3$ de forme sphérique, poreux, obtenus dans un mélangeur avec au moins un liant,
- on munit les corps de $Al_2O_3$ de forme sphérique, poreux, mouillés avec au moins un liant, par adjonction de particules de matières solides, abrasives à granulométrie fine avec une couche de particules de matières solides, abrasives à granulométrie fine, et
- les corps $Al_2O_3$ de forme sphérique, poreux, revêtus de particules de matières solides abrasives à granulométrie fine, sont ensuite soumis à un traitement thermique pour renforcer l'enveloppe.

**17.** Procédé selon la revendication 16,
**caractérisé en ce qu'**
on utilise un liant anorganique dilué avec de l'eau.

**18.** Procédé selon l'une des revendications 16 ou 17,
**caractérisé en ce qu'**
on effectue le traitement thermique dans une plage de températures comprise entre 400°C et 1400°C.

**19.** Procédé selon la revendication 16,
**caractérisé en ce qu'**
on utilise un liant organique.

**20.** Procédé selon l'une des revendications 16 ou 19,

**caractérisé en ce qu'**
on effectue le traitement thermique dans une plage de températures comprise entre 200°C et 500°C.

**21.** Procédé selon l'une des revendications 16 à 20,
**caractérisé en ce qu'**
avec les matières solides abrasives à granulométrie fine, on prévoit des additifs supplémentaires dans le groupe comprenant les additifs de frittage, des agents de formation de ciment et des matières abrasives actives telles que par exemple des sulfures, des carbonates, des halogénures et des phosphates du groupe des éléments comprenant Na, K, Li, Mg, Ca, Al, Mn, Cu, Sn, Fe, Ti, Sb, Zn.

**22.** Utilisation du grain abrasif selon l'une des revendications 1 à 15, pour fabriquer des disques abrasifs.

**23.** Utilisation du grain abrasif selon l'une des revendications 1 à 15, pour la fabrication d'agents abrasifs sur un support.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 1871792 A
- US 1871793 A
- DE 628936
- US 2261639 A
- US 2986455 A
- DE 1281306
- US 2340194 A
- DD 134638
- GB 284131 A
- EP 1157077 A
- DE 3147597